(19) Europäisches Patentamt
European Patent Office
Office européen des brevets

(11) EP 0 971 978 B1

(12) **EUROPÄISCHE PATENTSCHRIFT**

(45) Veröffentlichungstag und Bekanntmachung des Hinweises auf die Patenterteilung:
**17.09.2003 Patentblatt 2003/38**

(21) Anmeldenummer: **98912484.7**

(22) Anmeldetag: **18.03.1998**

(51) Int Cl.[7]: **C08K 5/13**, C08K 5/52, C08L 33/12, C08L 25/12, C08L 51/04, C08L 53/02

(86) Internationale Anmeldenummer:
**PCT/EP98/01552**

(87) Internationale Veröffentlichungsnummer:
**WO 98/045365 (15.10.1998 Gazette 1998/41)**

# (54) TRANSPARENTE, SCHLAGZÄHMODIFIZIERTE THERMOPLASTISCHE FORMMASSEN

TRANSPARENT IMPACT-RESISTANT MODIFIED THERMOPLASTIC MOULDING MATERIALS

MATIERES MOULABLES THERMOPLASTIQUES TRANSPARENTES RESISTANT AU CHOC

(84) Benannte Vertragsstaaten:
**AT BE DE ES FR GB IT NL**

(30) Priorität: **03.04.1997 DE 19713895**

(43) Veröffentlichungstag der Anmeldung:
**19.01.2000 Patentblatt 2000/03**

(73) Patentinhaber: **BASF AKTIENGESELLSCHAFT**
**67056 Ludwigshafen (DE)**

(72) Erfinder:
- **SCHADE, Christian**
  **D-67061 Ludwigshafen (DE)**
- **NEUMANN, Rainer**
  **D-67112 Mutterstadt (DE)**
- **MESSINGER, Claudia**
  **D-68159 Mannheim (DE)**
- **BENKER, Klaus**
  **D-67435 Neustadt (DE)**
- **KURPS, Armin**
  **D-67459 Böhl-Iggelheim (DE)**

(56) Entgegenhaltungen:
**EP-A- 0 426 499**
**DE-A- 2 229 550**
**DE-A- 4 111 282**
**US-A- 5 451 624**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 971 978 B1

## Beschreibung

Die vorliegende Erfindung betrifft transparente, schlagzähmodifizierte thermoplastische Formmassen, enthaltend

A) eine Matrix aus mindestens zwei unterschiedlichen Blendkomponenten,

B) Schlagzähmodifier,

C) ein Additiv, im wesentlichen bestehend aus

$c_1$) mindestens einem 2,6-disubstituierten Phenol und

$c_{21}$) mindestens einem organischen Phosphit der allgemeinen Formel (I)

$$P(OR^1)_n(OAr)_{3-n} \quad (I),$$

in der die Substituenten und Indizes die folgende Bedeutung haben:

$R^1$ $C_6$- bis $C_{30}$-Alkyl in geradkettiger und/oder verzweigter Form, $C_6$- bis $C_{20}$-Cycloalkyl, jeweils substituiert oder unsubstituiert,

Ar $C_6$- bis $C_{20}$-Aryl oder Heteroaryl, jeweils substituiert oder unsubstituiert,

n 1, 2 oder 3, wobei mehrere Reste $R^1$ oder Ar in (I) gleich oder verschieden sind, oder

$c_{22}$) mindestens einem organischen Phosphit der allgemeinen Formel (IIa) und/oder (IIb)

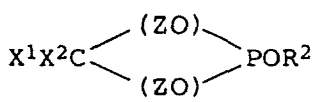

(IIa),

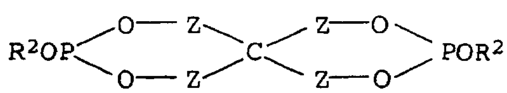

(IIb),

in der die Substituenten die folgende Bedeutung haben:

$R^2$ $C_6$- bis $C_{30}$-Alkyl in geradkettiger und/oder verzweigter Form, $C_6$- bis $C_{20}$-Cycloalkyl, jeweils substituiert oder unsubstituiert,

$X^1$,$X^2$ $C_1$- bis $C_{20}$-Alkyl oder $C_1$- bis $C_{20}$- Alkoxy, $C_3$- bis $C_{20}$-Cycloalkyl, $C_6$- bis $C_{20}$-Aryl oder -Aryloxy, $C_7$- bis $C_{30}$-Aralkyl, wobei die genannten Reste substituiert oder unsubstituiert sind,
Wasserstoff, Hydroxy, NR'R'', wobei R', R'' für Wasserstoff, $C_1$- bis $C_6$-Alkyl, $C_6$- bis $C_{20}$-Aryl, $C_7$- bis $C_{30}$-Aralkyl oder $C_3$- bis $C_6$-Cycloalkyl stehen;
oder gemeinsam mit C einen $C_3$- bis $C_{10}$-Carbocyclus oder einen $C_2$- bis $C_{10}$- Heterocyclus, enthaltend ein oder mehrere Heteroatome ausgewählt aus den Gruppen VA oder VIA des Periodensystems der Elemente, wobei die genannten Cyclen substituiert oder unsubstituiert sind;
eine Carbonyl- oder Thiocarbonylgruppe;

Z unsubstituiertes oder substituiertes $C_1$- bis $C_{10}$-Alkylen oder C6- bis $C_{20}$-Arylen, $-Si(R^3)(R^4)-$, $-R^5-Si(R^3)(R^4)-R^6-$, mit

$R^3$,$R^4$ $C_1$- bis $C_{10}$-Alkyl, $C_6$- bis $C_{14}$-Aryl, Aralkyl mit einer $C_1$- bis $C_{10}$-Alkyleinheit und einer $C_6$- bis $C_{10}$-Aryleinheit, jeweils substituiert oder unsubstituiert,

$R^5$,$R^6$ $C_1$- bis $C_5$-Alkylen, $C_6$-Arylen, wobei die Reste Z in (IIa) oder (IIb) gleich oder verschieden sind; oder

$c_{33}$) einem Gemisch aus Verbindungen gemäß $c_{21}$) und $c_{22}$).

Des weiteren betrifft die Erfindung ein Verfahren zur Herstellung transparenter schlagzähmodifizierter Thermoplaste sowie deren Verwendung für die Herstellung von Formkörpern, Fasern und Folien. Weiterhin betrifft die Erfindung diese Folien, Fasern und Formkörper sowie deren Verwendung für die Herstellung von Verpakkungsmaterial oder für die Herstellung von Vorrichtungen der Medizintechnik oder der medizinischen Diagnostik. Außerdem betrifft die Erfindung transparentes Verpackungsmaterial und transparente Vorrichtungen der Medizintechnik oder der medizinischen Diagnostik.

Thermoplastische Materialien verhalten sich häufig nicht vollständig inert gegenüber Licht, energiereicher Strahlung (z.B. $\gamma$-Strahlung), Feuchtigkeit, Sauerstoff oder Wärme oder einer beliebigen Kombination der genannten Einflußfaktoren mit der Folge, daß sie bei der Verarbeitung oder Lagerung zu Verfärbung neigen oder Einbußen bei anderen Materialparametern erleiden. Um derartige Nachteile einzudämmen, werden thermoplastischen Formmassen in der Regel geeignete Stabilisatoren bzw. Stabilisatorsysteme beigemengt. Stabilisierende Additive für thermoplastische Formmassen sind bekannt. Obgleich dem Fachmann aber eine Vielzahl an unterschiedlichen Stabilisatoren zur Verfügung stehen, konnte insbesondere die Stabilisierung transparenter, schlagzähmodifizierter Formmassen, deren Matrix aus mindestens zwei unterschiedlichen Blendkomponenten aufgebaut ist, gegen Verfärbung bislang nicht zufriedenstellend gelöst werden. Dieses hängt u.a. damit zusammen, daß sich die Eignung von Stabilisatorsystemen selbst innerhalb verwandter thermoplastischer Zusammensetzungen nicht verläßlich vorherbestimmen läßt. Bei Thermoplasten, die sich aus mehreren Blendkomponenten zusammensetzen, findet man häufig nur einen Stabilisator, der für eine der Blendkomponenten zufriedenstellende Resultate liefert, nicht jedoch für die weiteren Blendmaterialien bzw. für das Gesamtsystem. In transparenten thermoplastischen Formmassen sind darüber hinaus Verfärbungen besonders leicht zu erkennen, so daß an das Stabilisatorsystem besonders hohe Anforderungen zu stellen sind.

Stabilisierende Additive für Methacrylat/Butadien/Styrol-(MBS)-Kern-Schale Pfropfcopolymere sind z.B. aus der US 5,451,624 bekannt. Hierbei handelt es sich um Kombinationen aus mindestens einem sterisch gehinderten Phenol, einem organischen Phosphit, einem organischen Sulfid und einem Puffersystem, mit denen sich allerdings bei transparenten thermoplastischen Formmassen Eintrübungen nicht vermeiden lassen. Zudem erfährt die Einsatzbreite dieser stabilisierten Formmassen durch die verwendeten Schwefelverbindungen, deren charakteristischer Eigengeruch sich niemals vollständig unterdrücken läßt, eine beträchtliche Einschränkung.

In der EP-A 426 499 werden stabilisierende Zusammensetzungen aus einem sterisch gehinderten Phenol, einem weniger gehinderten Phenol und einem Phosphit für MBS-Modifier beschrieben. Allerdings sind auch diese Systeme insbesondere in bezug auf die Verfärbung von transparenten Polymeren problematisch.

Der vorliegenden Erfindung lag demgemäß die Aufgabe zugrunde, wirksame Stabilisatoren bzw. Stabilisatorsysteme für insbesondere schlagzähmodifizierte, transparente Formmassen zur Verfügung zu stellen.

Demgemäß wurden die eingangs beschriebenen transparenten, schlagzähmodifizierten thermoplastischen Formmassen gefunden.

Des weiteren wurde ein Verfahren zur Herstellung transparenter, schlagzähmodifizierter Thermoplaste sowie deren Verwendung für die Herstellung von Formkörpern, Fasern und Folien gefunden.

Weiterhin wurden Folien, Fasern und Formkörper sowie deren Verwendung für die Herstellung von Verpakkungsmaterial oder für die Herstellung von Vorrichtungen der Medizintechnik oder der medizinischen Diagnostik gefunden. Außerdem wurden transparentes Verpackungsmaterial und transparente Vorrichtungen der Medizintechnik oder der medizinischen Diagnostik gefunden.

Bevorzugt sind solche transparenten schlagzähmodifizierten thermoplastischen Formmassen, die

A) eine Matrix aus mindestens zwei unterschiedlichen Blendkomponenten,

B) Schlagzähmodifier und

C) ein Additiv, im wesentlichen bestehend aus

$c_1$) mindestens einem 2,6-disubstituierten Phenol und

$c_{21}$) mindestens einer Verbindung der Formel (I)

$$P(OR^1)_n(OAr)_{3-n} \quad (I),$$

in der die Substituenten und Indizes die folgende Bedeutung haben:

$R^1$ $C_6$- bis $C_{20}$-Alkyl, $C_6$- bis $C_{10}$-Cycloalkyl, jeweils substituiert oder unsubstituiert, z.B. n-Hexyl, n-Heptyl, n-Octyl, i-Octyl, n-Dodecyl, Cyclohexyl, Cycloheptyl oder 1-Methylcyclohexyl,

Ar unsubstituiertes oder substituiertes $C_6$- bis $C_{10}$-Aryl, z.B. Phenyl, Naphthyl oder Tolyl,

n 1, 2, 3, oder

$c_{22}$) mindestens einer Verbindung der Formel (IIb)

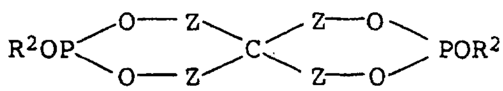

(IIb),

in der die Substituenten die folgende Bedeutung haben:

$R^2$ unsubstituiertes oder substituiertes $C_6$- bis $C_{20}$-Alkyl, z.B. n-Hexyl, n-Heptyl, n-Octyl, i-Octyl, n-Dodecyl, Cyclohexyl, Cycloheptyl oder 1-Methylcyclohexyl,

Z $C_1$- bis $C_3$-Alkylen, wie Methylen, 1,2-Ethylen oder 1,3-Propylen, oder o-, m- oder p-Phenylen, jeweils unsubstituiert oder substituiert, wobei die Reste Z oder $R^2$ in (IIb) gleich oder verschieden sind; oder

$c_{23}$) einem Gemisch aus Verbindungen gemäß $c_{21}$) und $c_{22}$),

enthalten.

Als Blendkomponenten für die Matrix A) der erfindungsgemäßen thermoplastischen Formmassen kommen z.B. Polyalkylmethacrylate, wie Polymethylmethacrylat, Polyethylmethacrylat oder Poly-2-ethylhexylmethacrylat, Styrol/Acrylnitril-Copolymere, z.B. die SAN-Komponente Luran® (BASF AG), Styrol/Acrylnitril/Methylmethacrylat-Copolymere, Styrol/Maleinsäureanhydrid-Copolymere, Styrol/Methylmethacrylat-Copolymere, Styrol/Butadien-Blockcopolymere, z.B. Styrolux® (BASF AG), Acrylnitril/Butadien/Styrol-Copolymere, z.B. die ABS-Komponente Terluran® (BASF AG), oder Acrylnitril/Styrol/Acrylester-Copolymere, z.B. die ASA-Komponente Luran®S (BASF AG), sowie die entsprechenden schlagzähmodifizierten Polymere in Betracht. Grundsätzlich kann die Zusammensetzung der Blendkomponenten in der Matrix beliebig sein.

Bevorzugt wird eine Matrix auf der Basis eines schlagzähmodifizierten Polymethylmethacrylat/Styrol/Acrylnitril-Copolymer-Blends eingesetzt.

Anstelle der Komponente Polymethylmethacrylat kann dabei auch ein Copolymerisat aus Methylmethacrylat und Alkylacrylaten, bevorzugt Methyl- oder Butylacrylat, wobei der auf Methylmethacrylat zurückgehende Anteil mindestens 60 Gew.-%, bevorzugt mehr als 80 Gew.-% und insbesondere mehr als 90 Gew.-% ausmacht, verwendet werden. Vorteilhafterweise verfügt das Copolymere über ein mittleres Molekulargewicht $\overline{M_w}$ größer als 50000 g/mol, bevorzugt größer 75000 g/mol und besonders bevorzugt größer 100000 g/mol. Neben Methyl- und Butylacrylaten kommen als Alkylacrylate grundsätzlich solche mit 1 bis 8 Kohlenstoffatomen im Alkylrest in Frage. Als solche $C_1$- bis $C_8$-Alkylester der Acrylsäure sind zu nennen: Ethylacrylat, Propylacrylat, n-Pentylacrylat, n-Hexylacrylat, n-Heptylacrylat, n-Octylacrylat und 2-Ethylhexylacrylat sowie Mischungen der genannten Verbindungen, insbesondere aber Methylacrylat, Ethylacrylat, n-Butylacrylat, 2-Ethylhexylacrylat oder Mischungen letztgenannter Verbindungen, wobei Methylacrylat besonders bevorzugt ist. Insbesondere die Methylmethacrylatpolymerisate mit einem Alkylacrylatgehalt von 0,5 bis 7,0 Gew.-% verfügen noch über eine ausreichende Wärmeformbeständigkeit. Grundsätzlich können Homo- und Copolymerisate mit einem mittleren Molekulargewicht $\overline{M}_w$ im Bereich von 50000 bis 300000 g/mol (bestimmt durch Lichtstreuung in Chloroform) als Blendkomponenten für die erfindungsgemäßen thermoplastischen Formmassen eingesetzt werden.

Methylmethacrylatpolymerisate können durch Substanz-, Lösungsoder Perlpolymerisation nach allgemein bekannten Methoden hergestellt werden (siehe beispielsweise Kunststoff-Handbuch, Band IX, "Polymethacrylate",

Vieweg/Esser, Carl-Hanser-Verlag 1975), sind aber auch im Handel erhältlich.

Wird als Blendkomponente ein Styrol/Acrylnitril-Copolymerisat (SAN) verwendet, so sind solche Polymerisate bevorzugt, die aus 78 bis 88 Gew.-% Styrol und 22 bis 12 Gew.-% Acrylnitril zusammengesetzt sind. In einer besonders bevorzugten Ausführungsform weist das SAN-Copolymerisat einen Styrolanteil im Bereich von 80 bis 85 Gew.-% und einen Acrylnitrilanteil von 20 bis 15 Gew.-% auf. Unter diesen Zusammensetzungen sind jene besonders vorteilhaft, die eine Viskositätszahl, bestimmt in einer 0,5-%igen Lösung in Dimethylformamid, im Bereich von 30 bis 250, bevorzugt im Bereich von 50 bis 150 und besonders bevorzugt im Bereich von 60 bis 120 besitzen. Die Copolymerisate können nach allen bekannten Verfahren hergestellt werden, beispielsweise durch Substanz-, Lösungs-, Suspensions- oder Emulsionspolymerisation. Bevorzugt werden in Lösung erzeugte Copolymerisate verwendet, wobei ein bevorzugtes Verfahren in der GB-PS 14 72 195 beschrieben ist.

Als vinylaromatische Komponente von SAN-Copolymerisaten ist nicht nur Styrol, sondern ebenfalls mit ein- bis dreifach mit $C_1$- bis $C_8$-Alkylresten substituiertes Styrol, wie p-Methylstyrol oder t-Butylstyrol sowie $\alpha$-Methylstyrol geeignet. Bevorzugt wird aber Styrol eingesetzt.

Als Vinylcyanid-Komponente von SAN-Copolymerisaten kommen neben Acrylnitril Methacrylnitril oder Mischungen von Acrylnitril und Methacrylnitril in Frage, bevorzugt ist Acrylnitril.

Dem Matrixmaterial A) werden ein oder mehrere Schlagzähmodifier B) zugesetzt. Zur Schlagzähmodifizierung können z.B. Pfropfcopolymerisate verwendet werden, wobei diejenigen mit dreischaligem Aufbau in der Regel vorzuziehen sind. Allerdings können auch zweischalige Pfropfcopolymerisate, wie sie z.B. in der EP-B 0 062 223 beschrieben sind, in den erfindungsgemäßen thermoplastischen Formmassen enthalten sein.

Grundsätzlich kommen Pfropfcopolymerisate in Frage, die über eine harte Schale sowie über einen weichen Kern verfügen. Bevorzugt besteht die Pfropfschale dabei vollständig oder in nicht geringen Teilen aus einem oder mehreren Methacrylsäureestern von $C_1$- bis $C_8$-Alkanolen. Besonders bevorzugt wird Methylmethacrylat, entweder allein oder in Beimengung geringer Mengen weiterer Acrylsäureester, z.B. Methyl-, Ethyl-, Propyl-, Butylacrylat, eingesetzt. Daneben kann die Schale in Teilen vinylaromatische Monomeren mit bis zu 12 Kohlenstoffatomen enthalten, wobei am Kern alkylsubstituierte Styrole mit bis zu 12 Kohlenstoffatomen, insbesondere aber Styrol selbst bevorzugt sind.

Als Pfropfgrundlage bzw -kern kommen Copolymerisate von Butadien und/oder Isopren mit Styrol oder einem in $\alpha$-Stellung oder vorzugsweise am Kern mit einer (oder am Kern auch mit mehreren) Alkylgruppe(n), vorzugsweise Methyl, substituierten Styrol mit bis zu 12 Kohlenstoffatomen in Frage.

Bevorzugt weist der Kern des Pfropfcopolymerisats eine Glasübergangstemperatur von kleiner als 0°C auf, besonders bevorzugt kleiner -20°C. Die mittlere Teilchengröße des Kerns liegt im Bereich von 30 bis 250 nm, besonders bevorzugt im Bereich von 50 bis 180 nm. Üblicherweise stellt man den Kern durch Emulsionspolymerisation her, wie etwa beschrieben in der Encyclopedia of Polymer Science and Engineering, 1985, Vol. 1, S. 401 ff.

In einer bevorzugten Ausführungsform verfügen die zur Schlagzähmodifizierung der erfindungsgemäßen Formmassen eingesetzten Pfropfcopolymerisate über eine zusätzliche innere Schale zwischen dem weichen Kern und der harten äußeren Schale. Diese Pfropfhülle setzt sich üblicherweise zusammen aus einem vinylaromatischen Monomer, einem Alkylester der Methacrylsäure oder -acrylsäure und gegebenenfalls einem Vernetzermonomer.

Hierbei kann man als vinylaromatisches Monomer die vorhergehend beschriebenen Verbindungen verwenden.

Als Alkylester der Methacrylsäure kommen insbesondere die $C_1$- bis $C_8$-Alkylester wie Methylmethacrylat, Ethylmethacrylat, n-, i-Propylmethacrylat, n-Butylmethacrylat, Isobutylmethacrylat, s-Butylmethacrylat, t-Butylmethacrylat, n-Pentylmethacrylat, n-Hexylmethacrylat, n-Heptylmethacrylat, n-Octylmethacrylat oder 2-Ethylhexylmethacrylat sowie Mischungen dieser Monomere in Frage, wobei Methylmethacrylat besonders bevorzugt ist.

Als Alkylester der Acrylsäure können in entsprechender Weise ebenfalls die $C_1$- bis $C_8$-Alkylester eingesetzt werden. Bevorzugt sind Methyl-, Ethyl-, n-Butyl-, 2-Ethylhexylacrylat, insbesondere n-Butylacrylat.

Unter vernetzend wirkende Monomere fallen im wesentlichen dioder polyfunktionelle Comonomere, wobei besonders bevorzugt auf Alkylenglykoldimethacrylate wie Ethylen-, Propylen- und Butylenglykoldimethacrylat sowie gleichfalls Allylmethacrylat, Methacrylate von Glycerin, Trimethylolpropan, Pentaerythrit sowie Vinylbenzole wie Di- oder Trivinylbenzol zurückgegriffen wird.

Grundsätzlich können thermoplastische Formmassen verwendet werden, bei denen das Gewichtsverhältnis von Matrix A) zu Schlagzähmodifier B) im Bereich von 99:1 bis 1:99 liegt.

Das aus mindestens zwei Blendkomponenten zusammengesetzte, schlagzähmodifizierte Matrixmaterial besteht in einer bevorzugten Ausführungsform aus einem Gemisch von

> 4 bis 80 Gew.-%, besonders bevorzugt von 15 bis 70 Gew.-% und insbesondere von 20 bis 40 Gew.-% eines Methylmethacrylatpolymerisates aus 90 bis 100 Gew.-% Methylmethacrylat und 10 bis 0 Gew.-% eines Alkylacrylats mit 1 bis 8 Kohlenstoffatomen im Alkylrest,

5 bis 70 Gew.-%, besonders bevorzugt von 10 bis 50 Gew.-% und insbesondere von 20 bis 45 Gew.-% eines Styrol/Acrylnitrilcopolymerisates aus 78 bis 88 Gew.-% Styrol und 22 bis 12 Gew.-% Acrylnitril und

15 bis 91 Gew.-%, besonders bevorzugt von 20 bis 50 Gew.-% und insbesondere von 25 bis 45 Gew.-% eines Pfropfcopolymerisates, bestehend aus 50 bis 80 Gew.-%, bezogen auf das Pfropfcopolymerisat, einer elastomeren Pfropfgrundlage mit einer Glasübergangstemperatur kleiner als -20°C, bestehend aus 60 bis 90 Gew.-% Butadien oder Isopren und 10 bis 40 Gew.-% Styrol oder eines Alkylstyrols mit bis zu 12 Kohlenstoffatomen, und 20 bis 50 Gew.-% einer harten Pfropfschale, bestehend aus 40 bis 100 Gew.-% eines oder mehrerer Methacrylsäureester von C1-bis $C_8$-Alkanolen, 0 bis 60 Gew.-% eines vinylaromatischen Monomeren mit bis zu 12 Kohlenstoffatomen und 0 bis 2 Gew.-% eines vernetzenden Monomeren.

In einer weiteren bevorzugten Ausführungsform enthält die schlagzähmodifizierte Matrix eine Mischung aus

4 bis 80 Gew.-%, besonders bevorzugt von 10 bis 60 Gew.-% und insbesondere von 15 bis 50 Gew.-% eines Methylmethacrylatpolymerisats, bestehend aus 90 bis 100 Gew.-%, bezogen auf das Methylmethacrylatpolymerisat, Methylmethacrylat und 0 bis 10 Gew.-% eines $C_1$- bis $C_8$-Alkylesters der Acrylsäure,
und
5 bis 90 Gew.-%, besonders bevorzugt von 10 bis 70 Gew.-% und insbesondere von 15 bis 60 Gew.-% eines Styrol/Acrylnitrilcopolymerisates, bestehend aus, bezogen auf das·SAN-Copolymerisat, 78 bis 88 Gew.-% Styrol und 12 bis 22 Gew.-% Acrylnitril,
und
10 bis 91 Gew.-%, besonders bevorzugt von 15 bis 60 Gew.-% und insbesondere von 15 bis 40 Gew.-% eines Pfropfcopolymerisates, bestehend aus, bezogen auf das Pfropfcopolymerisat, 40 bis 80 Gew.-% eines Pfropfkerns, bestehend aus 65 bis 90 Gew.-% Butadien oder Isopren und 10 bis 35 Gew.-% Styrol,
und
10 bis 30 Gew.-% einer ersten Pfropfhülle, bestehend aus 30 bis 95 Gew.-%, insbesondere 30 bis 60 Gew.-% Styrol und 5 bis 70 Gew.-% eines $C_1$- bis $C_8$-Alkylesters der Acrylsäure und 0 bis 2 Gew.-% eines vernetzenden Monomeren,
und
10 bis 30 Gew.-% einer zweiten Pfropfhülle, bestehend aus 70 bis 100 Gew.-% eines $C_1$- bis $C_8$-Alkylesters der Methacrylsäure und 0 bis 30 Gew.-% eines $C_1$- bis $C_8$-Alkylesters der Acrylsäure.

Die Blendkomponenten und das Pfropfcopolymerisat addieren sich in den vorgenannten Aufstellungen zu 100 Gew.-%.

In einer weiteren bevorzugten Ausführungsform enthält die schlagzähmodifizierte Matrix

10 bis 60 Gew.-%, vorzugsweise von 20 bis 50 Gew.-%, eines Methylmethacrylat-Polymerisates, erhältlich durch Polymerisation einer Mischung, bestehend aus
90 bis 100 Gew.-%, vorzugsweise von 92 bis 98 Gew.-%, bezogen auf das Methylmethacrylat-Polymerisat, Methylmethacylat, und
0 bis 10 Gew.-%, vorzugsweise von 2 bis 8 Gew.-%, bezogen auf das Methylmethacrylat-Polymerisat, eines $C_1$- bis $C_8$-Alkylesters der Acrylsäure, und
10 bis 70 Gew.-%, vorzugsweise von 20 bis 40 Gew.-%, eines Copolymerisates, erhältlich durch Polymerisation einer Mischung, bestehend aus
75 bis 88 Gew.-%, vorzugsweise von 79 bis 85 Gew.-%, bezogen auf das Copolymerisat, eines vinylaromatischen Monomeren, vorzugsweise Styrol, und
12 bis 25 Gew.-%, vorzugsweise von 15 bis 21 Gew.-%, bezogen auf das Copolymerisat eines Vinylcyanids, vorzugsweise Acrylnitril, und
15 bis 50 Gew.-%, vorzugsweise von 20 bis 40 Gew.-%, eines Pfropfcopolymerisates, erhältlich aus
40 bis 80 Gew.-%, vorzugsweise von 50 bis 75 Gew.-%, bezogen auf das Pfropfcopolymerisat, eines Kerns erhältlich durch Polymerisation eines Monomerengemisches, bestehend aus
65 bis 90 Gew.-%, vorzugsweise von 70 bis 85 Gew.-%, eines 1,3-Diens, vorzugsweise Butadien oder Isopren, und
10 bis 65 Gew.-%, vorzugsweise von 15 bis 30 Gew.-%, eines vinylaromatischen Monomeren, vorzugsweise Styrol, und
10 bis 30 Gew.-%, vorzugsweise von 10 bis 25 Gew.-%, bezogen auf das Pfropfcopolymerisat, einer ersten Pfropfhülle, erhältlich durch Polymerisation eines Monomerengemisches, bestehend aus
30 bis 60 Gew.-%, vorzugsweise von 40 bis 50 Gew.-%, eines vinylaromatischen Monomeren, vorzugsweise Styrol,
40 bis 60 Gew.-%, vorzugsweise von 40 bis 55 Gew.-%, eines $C_1$- bis $C_8$-Alkylesters der Methacrylsäure und

0 bis 2 Gew.-%, vorzugsweise von 0 bis 1,2 Gew.-% eines vernetzenden Monomeren und
10 bis 30 Gew.-%, vorzugsweise von 10 bis 25 Gew.-%, bezogen auf das Pfropfcopolymerisat, einer zweiten Pfropfhülle, erhältlich durch Polymerisation eines Monomerengemisches, bestehend aus
70 bis 98 Gew.-%, vorzugsweise von 75 bis 92 Gew. -%, eines $C_1$- bis $C_8$-Alkylesters der Methacrylsäure und
2 bis 30 Gew.-%, vorzugsweise von 8 bis 25 Gew.-%, eines $C_1$- bis $C_8$-Alkylesters der Acrylsäure, wobei sich die Prozentangaben von Methylmethacrylat-Polymerisat, des zweiten Copolymerisates und des Pfropfcopolymerisates zu 100 Gew.-% addieren. Die letztgenannte Ausführungsform ist insbesondere dann besonders bevorzugt, wenn das Mengenverhältnis von erster Pfropfhülle zu zweiter Pfropfhülle im Bereich von 2 : 1 bis 1 : 2 liegt, der Brechungsindex der ersten Pfropfhülle größer als der Brechungsindex der zweiten Pfropfhülle ist und der Brechungsindex der Gesamtpfropfhülle kleiner als der Brechungsindex des Kerns ist, wobei der Betrag der Differenz aus Brechungsindex des Pfropfcopolymerisates und dem der schlagzähmodifizierten Matrix kleiner oder gleich 0,02 ist.

Die vorangehenden Bereichsangaben bzw. bevorzugten Bereichsangaben für die Pfropfcopolymerisate können ebenfalls auf beliebige erfindungsgemäße schlagzähmodifizierte Matrixsysteme übertragen werden.

Daneben können den beschriebenen schlagzähmodifizierten Matrixmaterialien übliche Zusatzstoffe in Mengen von bis zu 20 Gew.-%, bevorzugt in Mengen von 0 bis 10 Gew.-%, bezogen auf die Summe der vorgenannten Komponenten, beigemengt werden, soweit sie die Transparenz des Matrixmaterials nicht beeinträchtigen. Als solche kommen beispielsweise in Betracht: Styrol/Maleinsäureanhydrid-Copolymerisat, Farbstoffe, Schmiermittel und Antistatika.

Wird ein dreischaliges Pfropfcopolymerisat eingesetzt, so liegt das Mengenverhältnis von Zwischenschale zu äußerer Schale bevorzugt im Bereich von 2:1 bis 1:2.

Die Herstellung der beiden Pfropfhüllen erfolgt in Gegenwart des Kerns nach literaturbekannten Methoden, insbesondere durch Emulsionspolymerisation (vgl. Encyclopedia of Polymer, Science and Engineering, 1985, Vol. 1, S. 401 ff).

Durch die dabei angewandte sogenannte Saatfahrweise werden bei der Herstellung der beiden Pfropfhüllen keine neuen Teilchen gebildet. Darüber hinaus ermöglicht es die Saatfahrweise die Zahl und die Art der Teilchen in beiden Pfropfstufen durch die Menge und die Art des eingesetzten Emulgators zu bestimmen. Die Emulsionspolymerisation wird üblicherweise durch Polymerisationsinitiatoren ausgelöst.

Bei der Emulsionspolymerisation können ionogene und nicht ionogene Emulgatoren verwendet werden.

Geeignete Emulgatoren sind beispielsweise Dioctylnatriumsulfosuccinat, Natriumlaurylsulfat, Natriumdodecylbenzolsulfonat, Alkylphenoxypolyethylensulfonate und Salze von langkettigen Carbon- und Sulfonsäuren.

Als nichtionogene Emulgatoren sind beispielsweise Fettalkoholpolyglykolether, Alkylarylpolyglykolether, Fettsäuremonoethanolamide sowie ethoxylierte Fettsäureamide und -amine geeignet.

Bezogen auf das Gesamtgewicht des Emulsionspfropfcopolymerisates liegt die Gesamtemulgatormenge vorzugsweise bei 0,05 bis 5 Gew.-%.

Als Polymerisationsinitiatoren können Ammonium- und Alkaliperoxodisulfate wie Kaliumperoxodisulfat sowie Initiatorkombinationssysteme wie Natriumpersulfat, Natriumhydrosulfit, Kaliumpersulfat, Natriumformaldehydsulfoxylat und Kaliumperoxodisulfat, Natriumdithionit-Eisen-II-sulfat verwendet werden, wobei die Polymerisationstemperatur im Fall der thermisch zu aktivierenden Ammonium- und Alkaliperoxodisulfate bei 50 bis 100°C und bei den Initiatorkombinationen, die als Redoxsysteme wirksam sind, darunter liegen kann, etwa im Bereich von 20 bis 50°C.

Die gesamte Initiatormenge liegt vorzugsweise zwischen 0,02 und 1,0 Gew.-%, bezogen auf das fertige Emulsionspolymerisat.

Sowohl bei der Herstellung der Grundstufe, d.h. des Kerns als auch bei der Herstellung der beiden Pfropfstufen, d.h. der ersten und zweiten Pfropfhülle, können ferner Polymerisationsregler eingesetzt werden. Als Polymerisationsregler dienen u.a. Alkylmercaptane wie beispielsweise n- oder tert.-Dodecylmercaptan. Die Polymerisationsregler werden üblicherweise in einer Menge von 0,01 bis 1,0 Gew.-%, bezogen auf die jeweilige Stufe, eingesetzt.

Im übrigen wird das erfindungsgemäß zu verwendende Emulsionspfropfcopolymerisat so hergestellt, daß man eine wäßrige Mischung, bestehend aus Monomeren, Vernetzer, Emulgator, Initiator, Regler und einem Puffersystem in einem mit Stickstoff inertisierten Reaktor vorlegt, in der Kälte unter Rühren inertisiert und dann im Laufe von 15 bis 120 Minuten auf die Polymerisationstemperatur bringt. Anschließend wird bis zu einem Umsatz von mindestens 95 % polymerisiert. Monomere, Vernetzer, Emulgator, Initiator und Regler können auch komplett oder teilweise als Zulauf der wäßrigen Vorlage zugeführt werden.

Gegebenenfalls nach einer Nachreaktionszeit von 15 bis 120 Minuten werden die Pfropfhüllen unter Zulauf der Monomeren in Gegenwart des bereits gebildeten Kerns durch Emulsionspolymerisation erzeugt.

Die Isolierung des Emulsionspfropfcopolymerisates aus dem erhaltenen Latex erfolgt auf bekannte Weise durch Ausfällung, Filtration und anschließender Trocknung. Für die Ausfällung können beispielsweise wäßrige Lösungen von anorganischen Salzen wie Natriumchlorid, Natriumsulfat, Magnesiumsulfat und Calciumchlorid, wäßrige Lösungen von Salzen der Ameisensäure wie Magnesiumformiat, Calciumformiat und Zinkformiat, wäßrige Lösungen von anorganischen Säuren wie Schwefel- und Phosphorsäure sowie wäßrige ammoniakalische und aminische Lösungen sowie andere wäßrige alkalische Lösungen, z.B. von Natrium- und Kaliumhydroxid verwendet werden.

Die Trocknung kann beispielsweise durch Gefrier-, Sprüh-, Wirbelschicht- und Umlufttrocknung erfolgen.

Im übrigen gelten für die Herstellung von transparenten, schlagzähmodifizierten Matrixmaterialien, enthaltend mindestens zwei Blendkomponenten, die den erfindungsgemäßen Formmassen zugrundegelegt werden können, die in der EP-B 0 062 223 gemachten Ausführungen.

Erfindungsgemäß enthalten die transparenten, schlagzähmodifizierten thermoplastischen Formmassen zur Stabilisierung insbesondere gegen Eintrübung und Gelbfärbung als Additiv eine Mischung aus mindestens einem 2,6-disubstituierten Phenol und mindestens einem organischen Phosphit (Komponente C).

Als Additivkomponente $c_1$) geeignete 2,6-disubstituierte Phenole sind beispielsweise Verbindungen, die unter die folgende allgemeine Formel (III) fallen:

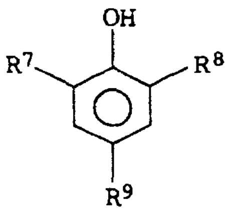

(III),

in der die Substituenten die folgende Bedeutung haben:

$R^7$,$R^8$ unabhängig voneinander $C_1$- bis $C_{10}$-Alkyl in geradkettiger und verzweigter Form, auch substituiert z.B. durch $C_1$-bis $C_4$-Alkyl, $C_6$- bis $C_{10}$-Aryl oder Halogenatome, wie Methyl, Ethyl, i-, n-Propyl, i-, n-, s-, t-Butyl sowie Pentyl, Hexyl, Octyl und deren Strukturanaloge, insbesondere Methyl und t-Butyl; $C_3$- bis $C_{10}$-Cycloalkyl, auch substituiert z.B. durch $C_1$- bis $C_4$-Alkyl, $C_6$- bis $C_{10}$-Aryl oder Halogenatome wie Cyclopropyl, Cyclopentyl, Cyclohexyl, 1-Methylcyclopropyl, 1-Methylcylopentyl und 1-Methylcyclohexyl, insbesondere 1-Methylcyclohexyl; $C_6$-bis $C_{20}$-Aryl, auch substituiert z.B. durch $C_1$- bis $C_4$-Alkyl, $C_6$- bis $C_{10}$-Aryl oder Halogenatome, wie Phenyl, Tolyl, Xylyl, Anisyl und Naphthyl, insbesondere Phenyl; Aralkyl, mit einer $C_1$- bis $C_{10}$-Alkyleinheit und einer $C_6$-bis $C_{10}$-Aryleinheit, wie Benzyl und p-Methoxybenzyl,

$R^9$ $C_1$- bis $C_{10}$-Alkyl in geradkettiger und verzweigter Form, auch substituiert z.B. durch $C_1$- bis $C_4$-Alkyl, $C_6$- bis $C_{10}$-Aryl oder Halogenatome, $C_6$- bis $C_{10}$-Aryl, auch substituiert z.B. durch $C_1$- bis $C_4$-Alkyl, $C_6$- bis $C_{10}$-Aryl oder Halogenatome, Aralkyl mit einer $C_1$- bis $C_{10}$-Alkyleinheit und einer $C_6$- bis $C_{10}$-Aryleinheit, $-(CH_2)_mCO_2R^{10}$ mit m = 1-10 und

$R^{10}$ $C_1$- bis $C_{30}$-Alkyl, bevorzugt $C_1$- bis $C_{20}$-Alkyl, in geradkettiger und verzweigter Form, auch substituiert z.B. durch Halogenatome, wie Methyl, Ethyl, i-, n-Propyl, i-, n-, s-, t-Butyl sowie Pentyl, Hexyl, Octyl und deren Strukturanaloge, insbesondere Methyl und t-Butyl; $C_3$-bis $C_{10}$-Cycloalkyl, auch substituiert z.B. durch $C_1$- bis $C_4$-Alkyl, $C_6$- bis $C_{10}$-Aryl oder Halogenatome, wie Cyclopropyl, Cyclopentyl, Cyclohexyl, 1-Methylcyclopropyl, 1-Methylcylopentyl und 1-Methylcyclohexyl, insbesondere 1-Methylcyclohexyl; $C_6$- bis $C_{20}$-Aryl, auch substituiert z.B. durch $C_1$- bis $C_4$-Alkyl, $C_6$- bis $C_{10}$-Aryl oder Halogenatome, wie Phenyl, Tolyl, Xylyl, Anisyl und Naphthyl, insbesondere Phenyl; Aralkyl mit einer $C_1$- bis $C_{10}$-Alkyleinheit und einer $C_6$- bis $C_{10}$-Aryleinheit, wie Benzyl und p-Methoxybenzyl.

Ebenfalls geeignet als Komponente $c_1$) sind Verbindungen, die unter die folgende allgemeine Formel (IV) fallen:

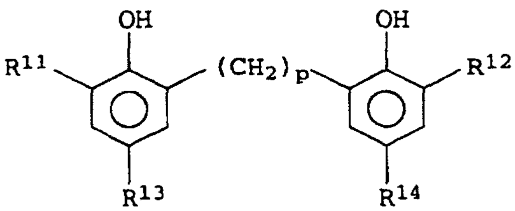 (IV),

in der die Substituenten und Indizes die folgende Bedeutung haben:

$R^{11}$,$R^{12}$ unabhängig voneinander, die unter $R^7$, $R^8$ aufgeführten Substituenten, bevorzugt t-Butyl,

$R^{13}$,$R^{14}$ unabhängig voneinander, die unter $R^9$ aufgeführten Substituenten, bevorzugt Methyl,

p 1, 2, 3, 4, insbesondere ist p = 1,

oder die unter die folgende allgemeine Formel (V) fallen:

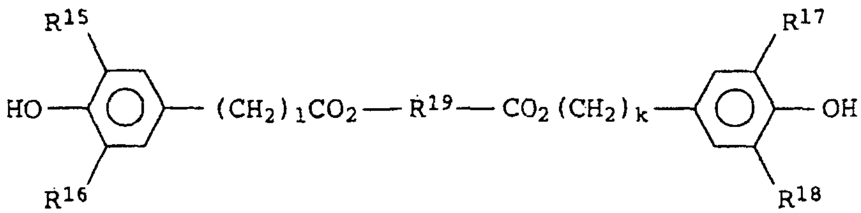 (V),

in der die Substituenten und Indizes die folgende Bedeutung haben:

$R^{15}$ bis $R^{18}$ unabhängig voneinander, die unter $R^7$, $R^8$ aufgeführten Substituenten, bevorzugt Methyl oder t-Butyl,

$R^{19}$ $C_1$- bis $C_{10}$-Alkylen, auch substituiert,
$-(CH_2)_2[O-(CH_2)_2]_q-$ mit q = 1 bis 3, und

l, k unabhängig voneinander, ganze Zahlen von 0 bis 6.

Grundsätzlich sind diejenigen 2,6-disubstituierten Phenole besonders bevorzugt, die entweder in 2- oder in 6-Position oder in 2-und in 6-Position einen Substituenten mit quaternärem Kohlenstoffatom, das direkt mit dem aromatischen Ring verknüpft ist, aufweisen, beispielsweise t-Butyl oder 1'-Methylcyclohexyl.

Besonders geeignete 2,6-disubstituierte Phenole sind beispielsweise die im Handel erhältlichen Octadecyl-3-[3,5-di-(1,1-dimethylethyl)-4-hydroxyphenyl]-propionat, 1,6-Hexandiolbis-[3-(3,5-di- (1,1-dimethylethyl)-4-hydroxyphenyl)-propionsäure]-ester, 2,6-Di-t-butyl-4-methyl-phenol, 1,6-Triethylenglycol- bis- [3-(3,5-di-(1,1-dimethylethyl)-4-hydroxyphenyl)-propionsäure]-ester, butylierte Reaktionsprodukte aus p-Cresol und Dicyclopentadien, z.B. CAS Reg.-No. [68610-51-52], 2,2'-Methylen-bis-(4-methyl-6-t-butyl-phenol), 2,2'-Methylenbis-[4-methyl-6-(1-methyl-cyclohexyl)-phenol], 2,2'-Isobutylidenbis-(4,6-dimethyl-phenol), α-Tocopherol oder Pentaerythrit-tetrakis- [3-(3,5-bis-(1,1-dimethylethyl)-4-hydroxyphenyl)-propionsäure]-ester.

Besonders werden 3-[3,5-Di-(1,1-dimethylethyl)-4-hydroxyphenyl]-propionsäureester eingesetzt, besonders bevorzugt sind Octadecyl-3-[3,5-di-(1,1-dimethylethyl)-4-hydroxyphenyl]-propionat und 1,6-Hexandiol-bis-[3-(3,5-di-(1,1-dimethylethyl)-4-hydroxyphenyl]-propionsäure]-ester.

Die aufgeführten 2,6-disubstituierten Phenole können allein oder im Gemisch vorliegend verwendet werden. Sie werden bevorzugt in Mengen von 0,02 bis 5 Gew.-%, besonders bevorzugt in Mengen von 0,05 bis 1 Gew.-% und insbesondere in Mengen von 0,1 bis 0,5 Gew.-%, jeweils bezogen auf die Gesamtmenge an Blendkomponenten und Pfropfcopolymerisat, eingesetzt.

Als weitere Additivkomponente werden ein oder mehrere organische Phosphite der allgemeinen Formel (I) oder (II), d.h. (IIa) und/oder (IIb), eingesetzt, die bereits vorhergehend näher beschrieben worden sind.

In einer Ausführungsform einer Verbindung $c_{22}$) nach Formel (IIa) können die Reste $X^1$ und $X^2$ gemeinsam

mit C einen $C_3$- bis $C_{10}$-Carbocyclus, bevorzugt einen $C_5$- bis $C_{10}$-Carbocyclus, wie Cyclopentyl, Cyclohexyl oder Cycloheptyl, oder einen $C_2$- bis $C_{10}$-Heterocyclus, enthaltend ein oder mehrere Heteroatome aus den Gruppen VA oder VIA des Periodensystems der Elemente, bevorzugt Stickstoff, Phosphor oder Sauerstoff, darstellen, wobei die Cyclen substituiert oder unsubstituiert sind.

Bei Heterocyclen enthaltend ein oder mehrere Heteroatome aus der Gruppe VA des Periodensystems der Elemente können die freien Valenzen am Heteroatom auf mannigfaltige Weise abgesättigt sein, im Fall von Phosphor z.B. durch $C_1$- bis $C_{30}$-Alkyl, bevorzugt $C_6$bis $C_{20}$-Alkyl, $C_6$- bis $C_{14}$-Aryl, bevorzugt $C_6$- bis $C_{10}$-Aryl, oder -O-$C_1$-Alkyl bis -O-$C_{30}$-Alkyl, bevorzugt -O-$C_6$-Alkyl bis -O-$C_{20}$-Alkyl, im Fall von Stickstoff z.B. durch $C_1$- bis $C_{30}$-Alkyl, bevorzugt $C_6$- bis $C_{20}$-Alkyl, $C_6$- bis $C_{14}$-Aryl, bevorzugt $C_6$- bis $C_{10}$-Aryl.

Neben beispielsweise Phosphor als Heteroatom können auch weitere Heteroatome aus den Gruppen VA oder VIA des Periodensystems der Elemente, wie Sauerstoff, im Heterocyclus enthalten sein, u.a. das Ringfragment -O-P-O-, wobei die freie Valenz am Phoshor wie oben beschrieben abgesättigt sein kann.

Bevorzugt werden Verbindungen (I) und (II) eingesetzt, bei denen die Reste $R^1$ und $R^2$ über 8 bis 14, besonders bevorzugt über 8 bis 12 Kohlenstoffatome verfügen.

Geeignete, unter die allgemeine Formel (I) fallende organische Phosphite sind zum Beispiel Triisooctylphosphit, Triisodecylphosphit, Trilaurylphosphit, Diisooctylphenylphosphit, Diisodecylphenylphosphit, Dilaurylphenylphosphit, Isooctyldiphenylphosphit, Diphenylisodecylphosphit und Diphenyllaurylphosphit.

Als geeignete, zur allgemeinen Formel (II) zu zählende Verbindungen sind zu nennen: Bislauryl-pentaerythritdiphosphit und Bisstearyl-pentaerythrit-diphosphit.

Es können sowohl einzelne Verbindungen, die unter die allgemeinen Formeln (I) oder (II) fallen, als Additivkomponente verwendet werden als auch Mischungen, gebildet aus Verbindungen gemäß der allgemeinen Formel (I) oder (II) sowie (I) und (II).

Die in den erfindungsgemäßen thermoplastischen Formmassen vorliegenden organischen Phosphite (I) und (II) sind jeweils bevorzugt in Mengen von 0,02 bis 5 Gew.-%, besonders bevorzugt jeweils in Mengen von 0,05 bis 1 Gew.-% und insbesondere in Mengen von jeweils 0,1 bis 0,5 Gew.-%, bezogen auf die das Matrixmaterial bildenden Blendkomponenten und die Pfropfcopolymerisate, enthalten.

Das Additiv C) kann des weiteren in geringen Anteilen, üblicherweise in Mengen von nicht mehr als 5 Gew.-%, bezogen auf C), zusätzliche Bestandteile enthalten.

Die Additivkomponenten können einzeln oder als Gemisch entweder zu den jeweiligen Komponenten der thermoplastischen Formmassen oder als letzte Komponente zu den bereits zusammengegebenen Bestandteilen der thermoplastischen Formmassen gegeben werden. Wahlweise kann auch ein Teil der Additivkomponenten vorab mit einem oder mehreren Thermoplastbestandteilen und der Rest mit den zusammengefügten Bestandteilen vermengt werden. Besonders bevorzugt ist jedoch die Zugabe der Additivkomponenten C) zum Pfropfcopolymerisat B) oder zur Mischung aller Komponenten.

Das Additiv C) bzw. die einzelnen Additivkomponenten können als Pulver oder in Form eines Granulats bei der Herstellung der erfindungsgemäßen thermoplastischen Formmassen eingesetzt werden. Dabei kann die Zugabe sowohl kontinuierlich als auch, insbesondere beim Einsatz von Granulat, im Batch-Betrieb erfolgen.

Das Vermischen der Blendkomponenten, des/der Pfropfcopolymerisate, des Additivs und gewünschtenfalls der Zusatzstoffe findet üblicherweise in der Schmelze bei Temperaturen im Bereich von 200 bis 280°C statt. Dieses gelingt z.B. mittels Schmelzextrusion.

Aus den erfindungsgemäßen thermoplastischen Formmassen lassen sich Folien, Fasern und insbesondere Formteile herstellen, wobei Formteile hauptsächlich durch Spritzgießen oder durch Formblasen zugänglich sind. Die thermoplastischen Formmassen können aber auch verpreßt, kalandriert, extrudiert oder vakuumgeformt werden. Die erfindungsgemäßen thermoplastischen Formmassen zeichnen sich insbesonders durch eine gute Spannungsrißbeständigkeit und Schlagzähigkeit aus und sind transparent. Sie weisen weiterhin einen sehr geringen Streulichtanteil und selbst bei Wärmelagerung keine merkliche Vergilbung auf.

Außerdem wird der Zähigkeitsabfall bei Bewitterung verzögert. Schließlich zeigen die erfindungsgemäßen Formmassen auch bei Bestrahlung mit energiereicher Strahlung, z. B. $\gamma$-Strahlung, selbst bei Wärmelagerung nur eine sehr geringe Vergilbungstendenz und behalten ihre guten mechanischen Eigenschaften wie beispielsweise die Schlagzähigkeit. D.h. eine Versprödung des Materials wird nicht beobachtet. Demgemäß eignen sich die erfindungsgemäßen Formmassen bzw. die daraus erhältlichen Folien, Fasern und Formkörper insbesondere auch als Verpackungsmaterial für z. B. Genußoder Nahrungsmittel, deren Haltbarkeit durch Bestrahlung mit energiereicher Strahlung verbessert wird.

Des weiteren eignen sich erfindungsgemäßen Formmassen oder die Folien, Fasern und Formkörper aus diesen Formmassen in Vorrichtungen der Medizintechnik oder der medizinischen Diagnostik insbesondere überall dort, wo sterilisierbares transparentes Material in Form von z. B. Kanülen, Schläuchen, Schlauchverbindungen, Infusionsbestecke, Dialysegehäuse oder Tropfkammern zum Einsatz kommt.

Demgemäß sind unter Verwendung der vorgenannten Additivkomponenten Produkte mit überraschend minimaler Vergilbungsneigung unter gleichzeitiger Beibehaltung der guten mechanischen Eigenschaften zugänglich. Daneben wirkt sich die Additivzugabe überraschenderweise ebenfalls vorteilhaft auf Faktoren wie Schmelzeeigenschaften, z.B. den Schmelzvolumenindex, Transparenz, Haze, Geruch, Ausschwitzverhalten, Entformungsverhalten und Gleitverhalten aus. Außerdem erfahren verwendete Zusatzstoffe, z.B. Farbstoffe, durch die stabilisierend wirkenden Additivkomponenten keine Beeinträchtigung.

Beispiele:

Für die Beispiele 1 bis 4 und die Vergleichsversuche V1 bis V6 wurden die nachfolgend näher bezeichneten Copolymerisate Q1 bis Q3 und Additive E1 bis E10 verwendet:

Q1 Copolymerisat aus Methylmethacrylat und Methylacrylat im Verhältnis 94:6 ($M_w$ = 111000 g/mol),

Q2 Copolymerisat aus Styrol und Acrylnitril im Verhältnis 81:19 mit einer Viskositätszahl von 100, bestimmt in einer 0,5 %igen Lösung in Dimethylformamid,

Q3 Pfropfcopolymerisat von 23 % Methylmethacrylat auf 22 % Styrol und Butylacrylat (90:10) auf 55 % Butadien und Styrol (72:28),

E1 Octadecyl-3-[3,5-di-(1,1-dimethylethyl)-4-hydroxyphenyl]-propionat (Irganox® 1076, Ciba),

E2* 1,1,3-Tris(2-methyl-5-tert.-butyl-4-hydroxyphenyl)butan (Topanol CA, ICI),

E3 1,6-Hexandiol-bis-[3-(3,5-di-(1,1-dimethylethyl)-4-hydroxyphenyl)-propionsäure]-ester (Irganox® 259, Ciba),

E4* Tris(nonylphenyl)phosphit,

E5* Tris(2,4-di-t-butylphenyl)phosphit (Irgafos® 168, Ciba),

E6* Bis(2,4-di-t-butylphenyl)pentaerythrit-diphosphit (Ultranox® 626, General Electric),

E7 Bisstearyl-pentaerythrit-diphosphit (Weston® 619, General Electric),

E8 Diphenyl-isooctyl-phosphit (Weston® ODPP, General Electric),

E9 Triisodecylphosphit (Weston® TDP, General Electric),

E10* Dilaurylthiodipropionat (Irganox® PS 800, Ciba);

(* nicht erfindungsgemäß).

Eine Mischung aus 28,1 Gew.-% Q1, 35,9 Gew.-% Q2, 36 Gew.-% Q3 und der jeweils angegebenen Menge der Additive wurde bei 250°C schmelzextrudiert. Das erhaltenen Granulat wurde bei einer Massetemperatur von 250°C zu 2 mm dicken Rundscheiben abgespritzt.

a) Vergilbungsprüfung

Die beschriebenen Rundscheiben wurden 6 Wochen bei 90°C in einem Wärmeschrank gelagert.

Die Messung des Gelbindex YI erfolgte nach ASTM-D 1925.

Der Gelbindex (Gelbstich) oder Yellownessindex YI basiert auf Farbmaßzahlen, die aus dem Transmissionsspektrum gemäß ASTM-D 1925 berechnet werden. Dabei wird die Lichtart D65 und der Großfeldnormalbeobachter zugrundegelegt.

Die Ergebnisse der Gelbindexbestimmung sind der nachfolgenden Tabelle 1 zu entnehmen.

Tabelle 1

| Versuch | Additiv[a)] | | YI vor Wärmelagerung | YI nach Wärmelagerung |
|---|---|---|---|---|
| V1 | 0.2 E1 | 0.2 E4 | 3.1 | 14.5 |
| V2 | 0.2 E1 | 0.2 E6 | 3.5 | 18.0 |
| V3 | 0.2 E1 | 0.2 E5 | 3.1 | 16.2 |
| V4 | 0.2 E2 | 0.2 E9 | 3.2 | 15.0 |
| V5 | 0.2 E1<br>0.15 E2 | 0.2 E5<br>- | 3.9 | 19.3 |
| V6 | 0.2 E1 | 0.2 E10 | 3.1 | 14.3 |
| Beispiel 1 | 0.2 E1 | 0.2 E7 | 3.2 | 8.0 |
| Beispiel 2 | 0.2 E1 | 0.2 E8 | 3.1 | 8.5 |
| Beispiel 3 | 0.2 E1 | 0.2 E9 | 3.3 | 8.5 |
| Beispiel 4 | 0.2 E3 | 0.2 E7 | 3.2 | 9.2 |

a) in Gew.-%, bezogen auf die Mischung der Komponenten Q1, Q2 und Q3
b) Zähigkeitsprüfung nach Bestrahlung

Die beschriebenen Rundscheiben wurden mittels einer $Co^{60}$-Quelle mit einer Dosis von 50 KGy (5 Mrad) bestrahlt.

Zur Zähigkeitsbestimmung wurde die Schlagzähigkeit nach ISO 179/1eU sowie die Durchstoßarbeit W-T (DIN 53 443) an 60 x 2 mm Rundscheiben ermittelt.

Die Ergebnisse für unbestrahlte und bestrahlte Probekörper sind Tabelle 2 zu entnehmen.

Tabelle 2

| Versuch | Additiv [a] | unbestrahlt | | | bestrahlt [d] | | |
|---|---|---|---|---|---|---|---|
| | | Schlagzähigkeit [b] [kJ/m²] | W - T [c] [Nm] | YI [e] | Schlagzähigkeit [b] [kJ/m²] | W - T [c] [Nm] | YI [e] |
| V7 | - - | 206 | 14 | 4 | 9 | 2,4 | 30 |
| Bsp. 5 | 0,2 E1 0,2 E7 | 195 | 16 | 3,2 | 123 | 12 | 20 |
| Bsp. 6 | 0,2 E1 0,2 E8 | 138 | 17 | 3,1 | 139 | 14 | 16 |

a) in Gew.-%, bezogen auf die Mischung der Komponenten Q1, Q2 und Q3
b) bestimmt gemäß ISO 179/1eU
c) bestimmt gemäß DIN 53 443
d) γ-Strahlung, Gesamtstrahlungsmenge: 50 kGy
e) direkt nach der Bestrahlung bestimmt

## Patentansprüche

1. Transparente, schlagzähmodifizierte thermoplastische Formmassen, enthaltend

   A) eine Matrix aus einem Copolymerisat aus Methylmethacrylat und einem $C_1$- bis $C_8$-Alkylacrylat und einem Copolymerisat aus Styrol und Acrylnitril,

   B) Schlagzähmodifier,

   C) ein Additiv, im wesentlichen bestehend aus

   $c_1$) Octadecyl-3-[3,5-di-(1,1-dimethylethyl)-4-hydroxyphenyl]-propionat oder 1,6-Hexandiol-bis-[3-(3,5-di-(1,1-dimethylethyl)-4-hydroxyphenyl)-propionsäure]-ester,

   $c_{21}$) Triisooctylphosphit, Triisodecylphosphit, Trilaurylphosphit, Diisooctylphenylphosphit, Diisodecylphenylphosphit, Dilaurylphenylphosphit, Isooctyldiphenylphosphit, Diphenylisodecylphosphit oder Diphenyllaurylphosphit oder

   $c_{22}$) Bislauryl-pentaerythrit-diphosphit oder Bisstearyl-pentaerythrit-diphosphit oder

   $c_{23}$) einem Gemisch aus Verbindungen gemäß $c_{21}$) und $c_{22}$).

2. Thermoplastische Formmassen nach Anspruch 1, worin als Schlagzähmodifier B) ein Pfropfcopolymerisat, bestehend aus einem Pfropfkern, gebildet aus Butadien und Styrol, einer ersten Pfropfhülle, gebildet aus Styrol und n-Butylacrylat und einer zweiten Pfropfhülle, gebildet aus Methylmethacrylat, eingesetzt wird.

3. Verfahren zur Herstellung der thermoplastischen Formmassen gemäß den Ansprüchen 1 bis 2, **dadurch gekennzeichnet, daß** die die Matrix A) bildenden Blendkomponenten, der Schlagzähmodifier B) und die das Additiv C) ausmachenden Komponenten, gegebenenfalls in Gegenwart von Zusatzstoffen, in der Schmelze bei Temperaturen im Bereich von 200 bis 300°C vermischt werden.

4. Verwendung der thermoplastischen Formmassen gemäß den Ansprüchen 1 bis 2 für die Herstellung von Folien, Fasern und Formkörpern.

5. Folien, Fasern oder Formkörper, im wesentlichen bestehend aus thermoplastischen Formmassen gemäß den Ansprüchen 1 bis 2.

6. Verwendung der Folien, Fasern oder Formkörper gemäß Anspruch 5 als Verpackungsmaterial oder für die Herstellung von Vorrichtungen der Medizintechnik oder der medizinischen Diagnostik.

7. Transparentes Verpackungsmaterial, im wesentlichen bestehend aus thermoplastischen Formmassen gemäß den Ansprüchen 1 bis 2.

8. Transparente Vorrichtung der Medizintechnik oder der medizinischen Diagnostik, im wesentlichen bestehend aus thermoplastischen Formmassen gemäß den Ansprüchen 1 bis 2.

## Claims

1. A transparent, impact-modified thermoplastic molding composition comprising

   A) a matrix of a copolymer of methyl methacrylate and a $C_1$-$C_8$-alkyl acrylate and of a copolymer of styrene and acrylonitrile,

   B) impact-modifier,

   C) an additive consisting essentially of

$c_1$) octadecyl 3-[3,5-di-(1,1-dimethylethyl)-4-hydroxyphenyl]propionate or 1,6-hexanediol bis-[3-(3,5-di (1,1-dimethylethyl)-4-hydroxyphenyl)propionate],

$c_{21}$) triisooctyl phosphite, triisodecyl phosphite, trilauryl phosphite, diisooctyl phenyl phosphite, diisodecyl phenyl phosphite, dilauryl phenyl phosphite, isooctyl diphenyl phosphite, diphenyl isodecyl phosphite or diphenyl lauryl phosphite or

$c_{22}$) bislauryl pentaerythritol diphosphite or bisstearyl pentaerythritol diphosphite or

$c_{23}$) a mixture of compounds defined under $c_{21}$) and $c_{22}$).

**2.** A thermoplastic molding composition as claimed in claim 1, where, as impact-modifier B), a graft copolymer is used which consists of a graft core formed from butadiene and styrene, a first graft shell formed from styrene and n-butyl acrylate, and a second graft shell formed from methyl methacrylate.

**3.** A process for preparing the thermoplastic molding compositions as claimed in either of claims 1 and 2, which comprises mixing the blend components forming the matrix A), the impact-modifier B) and the components making up the additive C), if desired in the presence of other added materials, in the melt at from 200 to 300°C.

**4.** The use of a thermoplastic molding composition as claimed in either of claims 1 and 2 for producing a film, fiber or shaped article.

**5.** A film, a fiber or a shaped article consisting essentially of thermoplastic molding compositions as claimed in either of claims 1 and 2.

**6.** The use of the films, fibers or shaped articles as claimed in claim 5 as packaging material or for producing equipment for medical engineering or for medical diagnostics.

**7.** A transparent packaging material consisting essentially of thermoplastic molding compositions as claimed in either of claims 1 and 2.

**8.** Transparent equipment for medical engineering or for medical diagnostics consisting essentially of thermoplastic molding compositions as claimed in either of claims 1 and 2.

## Revendications

**1.** Masses de moulage thermoplastiques transparentes, modifiées quant à la résistance au choc, contenant

A) une matrice à base d'un copolymère de méthacrylate de méthyle et d'un acrylate d'alkyle en $C_1$-$C_8$ et d'un copolymère de styrène et d'acrylonitrile,
B) un agent de modification de résistance au choc,
C) un additif, essentiellement constitué

$c_1$) de propionate d'octadécyl-3-[3,5-di-(1,1-diméthyléthyl)-4-hydroxyphényle] ou d'ester d'acide bis-[3-(3,5-di-(1,1-diméthyléthyl)-4-hydroxyphényl)-propionique de 1,6-hexanediol,
$c_{21}$) de phosphite de triisooctyle, de phosphite de triisodécyle, de phosphite de trilauryle, de phosphite de diisooctylphényle, de phosphite de diisodécylphényle, de phosphite de dilaurylphényle, de phosphite d'isooctyldiphényle, de phosphite de diphénylisodécyle ou de phosphite de diphényllauryle, ou
$c_{22}$) de diphosphite de bislauryl-pentaérythrite ou de diphosphite de bisstéaryl-pentaérythrite, ou
$c_{23}$) d'un mélange des composés selon $c_{21}$) et $c_{22}$).

**2.** Masses de moulage thermoplastiques suivant la revendication 1, dans lesquelles, comme agent de modification de la résistance au choc B), on met en oeuvre un copolymère de greffage, constitué d'un noyau de greffage, formé de butadiène et de styrène, d'une première enveloppe de greffage, formée de styrène et d'acrylate de n-butyle, et d'une deuxième enveloppe de greffage, formée de méthacrylate de méthyle.

**3.** Procédé de préparation des masses de moulage thermoplastiques suivant l'une des revendications 1 et 2, **carac-**

**térisé en ce que** les composants formant la matrice A), l'agent de modification de la résistance au choc B) et les composants représentant l'additif C) sont, éventuellement en présence d'additifs, mélangés dans la masse fondue à des températures de l'ordre de 200 à 300°C.

**4.** Utilisation des masses de moulage thermoplastiques suivant l'une des revendications 1 et 2, pour la préparation de feuilles, de fibres et de corps moulés.

**5.** Feuilles, fibres ou corps moulés, constitués essentiellement de masses de moulage thermoplastiques suivant l'une des revendications 1 et 2.

**6.** Utilisation des feuilles, fibres ou corps moulés suivant la revendication 5, comme matière d'emballage ou pour la préparation de dispositifs de la technique médicale ou du diagnostic médical.

**7.** Matières d'emballage transparentes, essentiellement constituées des masses de moulage thermoplastiques suivant l'une des revendications 1 et 2.

**8.** Dispositif transparent de la technique médicale ou du diagnostic médical, essentiellement constitué de masses de moulage thermoplastiques suivant l'une des revendications 1 et 2.